# EUROPÄISCHE PATENTSCHRIFT

(11) **EP 1 880 798 B1**
(45) Veröffentlichungstag und Bekanntmachung des Hinweises auf die Patenterteilung: **25.02.2009**
(21) Anmeldenummer: 07013934.0
(22) Anmeldetag: 17.07.2007
(51) Int. Cl.: B23Q 11/12

(54) **Spindeleinheit zum Einbau in eine Werkzeugmaschine**
Spindle unit for fitting in a machine tool
Unité de broche destinée au montage dans une machine-outil

(30) Priorität: 18.07.2006 DE 102006033601
(43) Veröffentlichungstag der Anmeldung: 23.01.2008
(73) Patentinhaber: Franz Kessler GmbH, 88422 Bad Buchau (DE)
(72) Erfinder: Kades, Helmut, 88422 Bad Buchau (DE); Rehnert, Ingo, 88422 Kanzach (DE); Rondé, Uwe Dr., 88422 Bad Buchau (DE)
(74) Vertreter: Roth, Klaus

(56) Entgegenhaltungen:
- EP-A1- 0 083 943
- EP-A1- 0 094 680
- EP-A1- 0 376 178
- DE-A1- 2 724 440
- DE-A1- 3 007 917
- JP-A- 59 118 330

## Beschreibung

Die Erfindung betrifft eine Spindeleinheit zum Einbau in eine Werkzeugmaschine nach dem Oberbegriff des Anspruchs 1.

Werkzeugmaschinen sind häufig mit sogenannten Motorspindeln ausgestattet, die ein rotierendes Werkzeug zum Bearbeiten eines Werkstücks antreiben. Die Werkzeugmaschinen sind hierbei mit einer Spindelaufnahme ausgestattet, die üblicherweise in Form eines sogenannten Spindelkastens bzw. Spindelstocks ausgebildet.ist. In der Regel wird die Motorspindel mit einem eigenen Spindelgehäuse versehen:und somit als Kompletteinheit in den Spindelkasten bzw. Spindelstock eingesetzt. In jüngster Zeit sind auch Ausführungen bekannt geworden (vgl. DE 102 35 069 A1), bei denen die Motorspindel ohne eigenes Spindelgehäuse unmittelbar in einen Spindelkasten verbaut wird.

Motorspindeln zeichnen sich häufig durch eine hohe Motorleistung aus, um die zu bearbeitenden Werkstoffe, wie Stahl oder dergleichen bearbeiten zu können. Dabei ist der Einsatzort der Motorspindeln häufig so ausgestaltet, dass eine Wärmeabgabe unmittelbar am Ort der Wärmequelle an die Umgebung nicht ohne zusätzliche Maßnahmen möglich ist.

Daher werden üblicherweise Motorspindeln mit einer Kühlung versehen. Bei kleineren Verlustleistungen von Motorspindeln und geringeren Anforderungen hinsichtlich der thermischen Stabilität kann eine Motorspindel mit Luftkühlung versehen werden (vgl. EP 376 178 A1, DE 30 07 917 A1). Hierbei wird über einen Lüfter Luft mit Umgebungstemperatur an verschiedenen Stellen der Spindel entlang geführt, um die Wärme abzuführen. Entsprechend der geringeren Wärmetransportfähigkeit von Luft gegenüber anderen Medien sind große Luftmengen und an der Spindel große Luftkanäle bzw. Wärmeübertragungsflächen erforderlich.

Der Nachteil der Luftkühlung ist unter anderem der erforderliche Bauraum für die Luftführung und die Kühlflächen an der Spindel. Bedingt durch die niedrige Wärmekapazität der Luft sowie die geometrisch nur begrenzt zuführbare Luftmenge können hohe Verlustleistungen von Motorspindeln nicht vollständig oder nur bei hohen Temperaturen abgeführt werden.

Daher ist man bereits dazu übergegangen, Flüssigkeitskühlungen auszubilden, die ein flüssiges Wärmemedium, in der Regel mit Zusätzen versetztes Wasser verwenden. Hierbei wird um den Motor der Spindel eine Kühlkammer ausgebildet, die beispielsweise mäander- oder spiralförmig sein kann. Durch einen geschlossenen Kühlkreislauf wird das Kühlmedium geführt, wobei die Kühlung auch andere Bereiche der Spindel, z.B. den Spindelkopf, die Lagerung, oder Kühltaschen mitkühlen kann, um ein thermisch definiertes Verhalten der Motorspindel zu erreichen. Die aus der Motorspindel mittels des Kühlmediums abgeführte Wärme wird mit einem Kühlaggregat gekühlt.

Anschließend wird das Kühlmedium wieder der Motorspindel zugeführt. Diese Kühlaggregate werden als von der Motorspindel unabhängige Komponenten der Werkzeugmaschine vorgesehen und bei Bedarf auch noch zur Kühlung weiterer Komponenten der Werkzeugmaschine eingesetzt. Die entsprechenden Kühlleitungen werden über Verbindungsleitungen von der jeweiligen Baugruppe der Werkzeugmaschine zu den Kühlaggregaten geführt und dort beim Aufbau der Maschine am Einsatzort angeschlossen. Diese Kühlaggregate sind weit entfernt von der Motorspindel häufig auch außerhalb der Werkzeugmaschine angeordnet.

Mit dieser Art der Kühlung ist ein erhöhter Aufwand auf Seiten der Werkzeugmaschine für den Einsatz einer Motorspindel verbunden. Dies trifft insbesondere dann zu, wenn tatsächlich außer der Motorspindel keine weiteren Maschinenkomponenten einer Kühlung bedürfen. Darüber hinaus sind derartige Kühlaggregate in der Regel nicht an den jeweiligen Typ der Motorspindel angepasst, so dass ein definiertes thermisches Verhalten der Motorspindel häufig nicht realisierbar ist.

Darüber hinaus ist bereits aus der DE 27.24 440 C2 eine Werkzeugmaschinenspindel mit einer Kühleineinheit bekannt geworden, wobei die Spindelwelle einen vollständig geschlossenen Kühlkreislauf mit einem Kühlmedium aufweist. Der Kühlkreislauf dieser Kühlvorrichtung ist jedoch nicht definiert steuerbar, so dass die Effizienz der Kühlung nicht optimal ist. Dies ist jedoch gerade bei schnelllaufenden Motorspindeln mit relativ großer Wärmeentwicklung von entscheidendem Nachteil. Entsprechend ist diese Art der Kühlung nicht für alle Motorspindeln bzw. für heutige oder gar zu erwartende zukünftige Anforderungen geeignet.

Aufgabe der Erfindung ist es, eine Vorrichtung vorzuschlagen, mittels der diese Nachteile wenigstens teilweise zu beheben sind.

Diese Aufgabe wird, ausgehend von einer Spindeleinheit nach dem Oberbegriff des Anspruchs 1, durch dessen kennzeichnende Merkmale gelöst. Durch die in den Unteransprüchen genannten Maßnahmen sind vorteilhafte Ausführungen und Weiterbildungen ; der Erfindung möglich.

Dementsprechend zeichnet sich eine erfindungsgemäße Spindeleinheit vor allem dadurch aus, dass der Kühlkreislauf zwischen einer Wärmeaufnahme der Motorspindel zum Aufnehmen von Motorspindelwärme und einer Kühleinheit zur Kühlung des Kühlmediums wenigstens ein Zuströmelement und ein Abströmelement zum Transportierten des Kühlmediums aufweist und dass die Spindeleinheit die Kühleinheit umfasst, wobei die Kühleinheit wenigstens teilweise in eine Spindelaufnahme einer Werkzeugmaschine einsetzbar ist.

Auf diese Weise ergibt sich eine integrierte kompakte Spindeleinheit, die gemäß einer vorteilhaften Variante der Erfindung als komplette Einheit in eine Werkzeugmaschine einbaubar ist. Zum einen muss hierdurch nicht notwendigerweise auf Seiten des Werkzeugmaschinenbetriebes ein Kühlaggregat vorgesehen werden, zum anderen ermöglicht diese Bauweise eine zielgerichtete Anpassung der Kühleinheit an den jeweiligen Typ der Motorspindel. Hierdurch lassen sich definierte thermische Verhältnisse im Bereich der Motorspindel bereitstellen. Nicht zuletzt können dadurch auch Fehlfunktionen, die auf einer ungenügenden Kühlung beruhen, vermieden werden.

Weiterhin ist gemäß der Erfindung das Abströmelement als erste Leitung zum Ableiten des von der Motorspindelwärme erwärmten Kühlmediums und das Zuströmelement als zweite Leitung zum Zuleiten des von der Kühleinheit gekühlten Kühlmediums zur Wärmeaufnahme ausgebildet. Hiermit :kann ein vorgegebener bzw. definierter und optimierter Kühlreislauf verwirklicht werden.

Ein definierter Kreislauf des Kühlmediums bzw. der Kühlflüssigkeit, wobei in vorteilhafter Weise die Kühlflüssigkeit bzw. das Kühlmedium exakt an wenigstens eine/ein oder mehrere definierte Stellen bzw. Bereiche der Motorspindel geführt werden kann, um hier Wärme aufzunehmen und zu einem Kühler zu leiten, kann eine definierte, möglichst optimale Wärmeabgabe, insbesondere mit Hilfe eines zweiten Kühlmediums bzw. Kühlvorrichtung, insbesondere mittels einer Kühlluft bzw. entsprechender Kühlelemente wie Kühlrippen oder dergleichen, realisieren.

Eine erfindungsgemäße Spindeleinheit kann beispielsweise eine Motorspindel ohne eigenes Gehäuse umfassen, die gemeinsam mit der Kühleinheit in einen Spindelkasten eingesetzt wird. Eine erfindungsgemäße Spindeleinheit kann jedoch auch eine Motorspindel mit einem von der Spindelaufnahme separaten Spindelgehäuse umfassen, wobei die Kühleinheit außerhalb dieses Spindelgehäuses angebracht ist.

In einer besonderen Ausführungsform der Erfindung kann jedoch die Kühleinheit wenigstens.teilweise auch in einem solchen Spindelgehäuse einer Motorspindel angeordnet werden. Durch die Anordnung der kompletten Kühleinheit in einem Spindelgehäuse ergibt sich eine besonders kompakte Baueinheit, die wie eine herkömmliche Motorspindel handzuhaben und in eine Werkzeugmaschine einbaubar ist.

Vorzugsweise wird die Kühleinheit wenigstens teilweise hinter der Motorspindel, d.h. auf der der Werkzeugseite gegenüberliegenden Seite der Motorspindel angeordnet. Durch diese Art der Anordnung der Kühleinheit ist der Platzbedarf der erfindungsgemäßen Spindeleinheit im Bereich der Motorspindel nicht oder nur unwesentlich vergrößert. Im hinteren Bereich der Motor Spindel hingegen ist in der Regel auch im Bereich der Spindelaufnahmen von Werkzeugmaschinen die Möglichkeit gegeben, eine zusätzliche Kühleinheit unterzubringen. Die erfindungsgemäße Spindeleinheit hat in diesem Fall das Erscheinungsbild einer gegenüber der tatsächlich verwendeten Motorspindel längeren Motorspindel.

In einer vorteilhaften Ausführungsform der Erfindung umfasst die Kühleinheit wenigstens einen Kühler mit oberflächenvergrößernden Kühlstrukturen. Diese Kühler ist dafür vorgesehen, um die vom Kühlmedium auf Seiten der Motorspindel aufgenommene Wärme über die oberflächenvergrößernden Strukturen an die Umgebung abzugeben. Durch die Oberflächenvergrößerung ist ein besserer wärmeübergang über die Wärmekontaktflächen möglich.

Vorteilhafterweise wird zusätzlich eine Luftkühlung für den Kühler vorgesehen, um die anfallende Abwärme zuverlässig abzuführen.

Hierbei wird vorzugsweise Umgebungsluft verwendet. Durch Verwendung eines Kühlers ist eine Wärmeabgabe im rückwärtigen Bereich der Spindeleinheit an die Umgebungsluft möglich, ohne dass wie bei herkömmlichen Luftkühlungen im vorderen Bereich der Motorspindel eine entsprechende platzraubende Bauform erforderlich ist.

In einer Weiterbildung dieser Ausführungsform wird zusätzlich ein Gebläse vorgesehen, um einen Luftstrom zur Wärmeabfuhr vom Kühler zu erzeugen. Durch die Verwendung eines Gebläses und die damit verbundene Erzeugung eines Luftstroms zur Kühlung des Kühlers des Kühlmediums kann wiederum ein kleinerer Kühler verwendet werden. Durch die aktiv am Kühler vorbeigeführte größere Luftmenge steht eine größere Wärmekapazität zur Wärmeabfuhr mittels des Luftstroms zur Verfügung, so dass die Kühleinheit insgesamt platzsparender ausführbar ist.

In einer bevorzugten Ausführungsform der.Erfindung wird ein flüssiges Kühlmedium im Kühlkreislauf vorgesehen. Ein flüssiges Kühlmedium bietet den Vorteil einer größeren Wärmekapazität im Vergleich mit einem gasförmigen Kühlmedium, so dass ein kleinerer Volumenstrom zur Abfuhr der erforderlichen Wärmemenge ausreichend ist.

Darüber hinaus bietet die Verwendung eines flüssigen Kühlmediums die Möglichkeit, den Phasenübergang zur Gasphase zu Kühlzwecken zu nutzen. So kann ein Kühlmedium, das bei der im Kühler vorherrschenden Temperatur in der flüssigen Phase vorliegt, am Ort des Temperaturübergangs von der Motorspindel zur Verdampfung gebracht werden. Durch die Verdampfung wird die hierzu benötigte Wärme von dem Kühlmedium aufgenommen und im Kühlkreislauf von der Motorspindel weggeführt. Im Bereich des Kühlers kann sodann das Kühlmedium wieder kondensieren und dabei die Kondensationswärme über den Kühler an die Umgebungsluft, vorzugsweise an den am Kühler vorbeiströmenden Luftstrom abgegeben werden. Das Kühlmedium ist für diese Ausführungsform entsprechend so auszuwählen bzw. auszubilden, dass es im Temperaturbereich auf Seiten der Motorspindel gasförmig und im Temperaturbereich auf Seiten des Kühlers in flüssiger Phase vorliegt.

Vorteilhafterweise wird zusätzlich eine Umwälzpumpe für das Kühlmedium vorgesehen. Zwar wäre es grundsätzlich denkbar, durch entsprechende Leitungsführung eine Umwälzung des Kühlmediums allein aufgrund der Temperaturdifferenz zwischen Motorspindel und Kühler zu realisieren. Die Verwendung einer Umwälzpumpe sorgt jedoch zum einen für eine größere konstruktive Freiheit im Bereich des Kühlkreislaufs und sorgt darüber hinaus auf einfache Weise für eine stabile Umwälzung im Kühlkreislauf.

Weiterhin ist es von Vorteil, einen Druck- und/oder Volumenausgleichsbehälter für das Kühlmedium vorzusehen. Da die erfindungsgemäße Spindeleinheit vorzugsweise mit geschlossenem Kühlkreislauf in die Spindelaufnahme der Werkzeugmaschine einsetzbar ausgebildet wird, empfiehlt sich die Verwendung eines solches Ausgleichsbehälters.

Durch Schwankungen in der abzuführenden Verlustleistung der Motorspindel ergeben sich entsprechende Schwankungen in der durch die Kühleinheit abzuführenden Wärmemenge. Insbesondere bei Ausnutzung der Verdampfungswärme zur Aufnahme der Abwärme der Motorspindel mit anschließender Kondensation des Kühlmediums im Kühler ergeben sich bei schwankender abzuführender Abwärme auch Volumenschwankungen durch die schwankende Menge des verdampften Kühlmediums. Im geschlossenen Kreislauf sind mit derartigen Volumenschwankungen auch Druckschwankungen verbunden. Diese Schwankungen im Druck und/oder Volumen des Kühlmediums können durch einen Ausgleichsbehälter ausgeglichen werden.

Vorteilhafterweise werden im Bereich der Motorspindel, d.h. an den Stellen, an denen die abzuführende Abwärme verstärkt auftritt; ebenfalls entsprechende Strukturen mit vergrößerter, Kontaktfläche für einen besseren Wärmeübergang in Kühlmedium vorgesehen. Denkbar wäre auch bei Verwendung wärmeleitenden Materials für die Kühlkreislaufführung im Bereich der. Wärmeübergabe an den Kühlkreislauf im Inneren des Medienstroms zusätzliche Strukturen vorzusehen, über ein Wärmeübergang in das Kühlmedium und insbesondere auch in der jeweiligen Ausführungsform eine Verdampfung des Kühlemediums stattfinden kann. Denkbar wäre an dieser Stelle Rippen- oder Lamellenstrukturen in unterschiedlichsten Ausprägungen.

Bei einer erfindungsgemäßen Spindeleinheit kann zudem neben der Kühlung des Motors der Motorspindel auch eine Kühlung anderer Komponenten, z.B. des Spindelkopfes, eines oder mehrerer Lager, Kühltaschen oder dergleichen vorgesehen werden, um ein thermisch definiertes Verhalten der Motorspindel zu bewirken.

Vorteilhafterweise kann ein definierter Kühlkreislauf des Kühlmediums bzw. des flüssigen Kühlmittels mit Hilfe einer Druckerzeugungseinheit bzw. einer Umwälzpumpe oder dergleichen und/oder eines Mediumsspeichers wie z.B. eines Ausgleichsbehälters oder dergleichen verwirklicht werden. Hiermit kann jedoch gemäß der Erfindung ein definierter Kreislauf des Kühlmediums bzw. der Kühlflüssigkeit realisiert werden, wobei das Kühlmedium bzw. die Kühlflüssigkeit an definierte Stellen bzw. Bereichen der Motorspindel geführt werden kann, um hier Wärme aufzunehmen und durch das Weiterströmen zu einem Kühler oder dergleichen, kann eine definierte Wärmeabgabe, insbesondere mit Hilfe eines zweiten Kühlmediums, insbesondere einer Kühlluft, bzw. entsprechender Kühlelemente wie Kühlrippen oder dergleichen, realisiert werden.

Ein Ausführungsbeispiel der Erfindung ist in der Zeichnung dargestellt und wir anhand der Figuren nachfolgend näher erläutert.

Im Einzelnen zeigt:
- Figur 1: eine perspektivisch Darstellung einer erfindungsgemäße Spindeleinheit und
- Figur 2: eine Spindeleinheit gemäß Figur 1 mit Spindelaufnahme einer Werkzeugmaschine.

Die Spindeleinheit 1 zeigt eine Motorspindel 2 mit einem Spindelgehäuse 3, das über zwei Kühlleitungen 4, 5 mit einer Kühleinheit 6 verbunden ist. Über die Kühlleitungen 4, 5 wird ein Kühlmedium in das Spindelgehäuse 3 eingeführt und dort auf nicht näher dargestellt Weise in Wärmekontakt mit dem dort befindlichen Spindelantrieb gebracht.

Die Kühleinheit 6 umfasst einen Kühler 7, ein Gebläse 8 sowie eine Umwälzpumpe 9. Weiterhin ist ein Ausgleichsbehälter 10 vorgesehen. Über die Umwälzpumpe 9 wird das Kühlmedium in dem.

Kühlkreislauf dem Kühler 7 zugeführt. Das Kühlmedium durchströmt den Kühler und gelangt anschließend wieder über den Kühlkreislauf in die Motorspindel 2. Der Kühler 7 entspricht bekannten Kühlern oder Wärmetauschern.

Das Gebläse 8 saugt durch den Kühler 7 Luft aus der Umgebung in Querrichtung Q bezüglich der Kühlerebene. Im Inneren des Kühlers 7 befinden sich oberflächenvergrößernde Strukturen, beispielsweise Lamellen, Rippen oder dergleichen. Über diese Oberflächenstrukturen gelangt das im Kühlkreislauf befindliche Kühlmedium in Wärmekontakt mit der zugeführten Umgebungsluft, so dass diese erwärmt und das Kühlmedium gekühlt wird. Parallel zur Kühlerebene in Richtung P wird anschließend die erwärmte Luft abgeblasen.

Der Kühlkreislauf ist im Inneren des Kühlers 7 über den Ausgleichsbehälter 10 geführt. In dieser Bauform ist der Ausgleichsbehälter 10 unmittelbar als Einheit mit dem Kühler 7 montierbar.

Die prinzipiell dargestellte Bauform ist sowohl für einen Kühlkreislauf mit dauerhaft, flüssigem Kühlmedium als auch für einen Kühlkreislauf mit Phasenübergängen verwendbar. Im erstgenannten Fall wird eine Kühlflüssigkeit als Kühlmedium im Kühlkreislauf umgewälzt. Im zweitgenannten Fall erfolgt eine Verdampfung im Inneren der Motorspindel 2 mit einer Kondensation im Bereich des Kühlers 7.

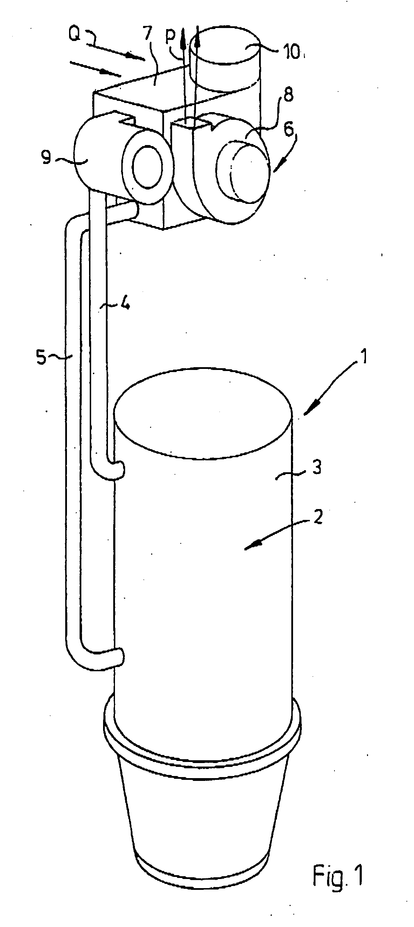

Die Spindeleinheit 1 gemäß Figur 1 wird als Ganzes in eine Spindelaufnahme einsetzbar ausgebildet. Hierzu sind nicht dargestellte Befestigungselemente für die Kühleinheit 6 vorzusehen. Gegebenenfalls kann hierzu auch eine rohrförmige Verlängerung des Spindelgehäuses 3 vorgesehen werden. Bei entsprechender Ausgestaltung des Spindelgehäuses 2 mit rückwärtiger Verlängerung können die Kühlleitungen 3, 4 auch vollständig im Inneren des Spindelgehäuses zur Kühleinheit 6 geführt werden.

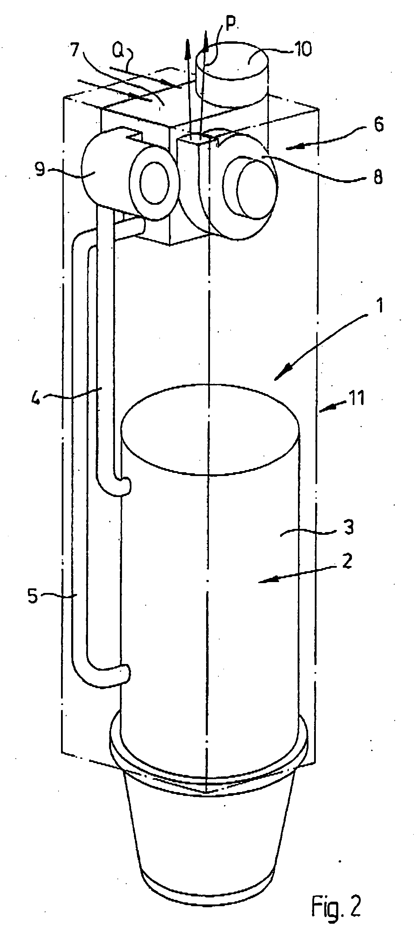

Erfindungswesentlich ist eine Bauform, bei der die Kühleinheit 6 eindeutig der Spindeleinheit zugeordnet und mit dieser vorzugsweise als Baueinheit in die Werkzeugmaschine einbaubar ist. Dies wird anhand von Figur 2 veranschaulicht, in der mit strichpunktierten Linien ein Spindelkasten dargestellt ist, der Bestandteil einer Werkzeugmaschine ist. Wie anhand von Figur 2 erkennbar ist, findet die gesamte. Spindeleinheit 1, in dieser Ausführungsform Platz im Spindelkasten 11, der die Spindelaufnahme der Werkzeugmaschine darstellt.

Die Spindelaufnahme der Werkzeugmaschine ist dabei im hinteren Bereich entweder offen oder zumindest mit Öffnungen ausgestaltet, die den vorbeschriebenen Luftstrom zur Kühlung des Kühlers 7 ermöglicht. Im Falle einer Ausführungsform, in dem die Kühleinheit 6 im Inneren eines entsprechend erweiterten Spindelgehäuses 3 untergebracht ist, sind gegebenenfalls entsprechende Zu- bzw. Abführungen für die Umgebungsluft ebenfalls im Spindelgehäuse vorzusehen.

### Bezugszeichenliste:

- 1: Spindeleinheit
- 2: Motorspindel
- 3: Spindelgehäuse
- 4: Kühlleitung
- 5: Kühlleitung
- 6: Kühleinheit
- 7: Kühler
- 8: Gebläse
- 9: Umwälzpumpe
- 10: Ausgleichsbehälter
- 11: Spindelkasten

## Patentansprüche

1. Spindeleinheit zum Einbau in eine mit einer Spindelaufnahme versehenen Werkzeugmaschine, wobei eine Motorspindel und ein im Wesentlichen geschlossener Kühlkreislauf mit einem flüssigen Kühlmedium zum Kühlen der Motorspindel vorgesehen ist, wobei eine Kühleinheit (6) wenigstens teilweise in eine Spindelaufnahme (11) einer Werkzeugmaschine einsetzbar ist, **dadurch gekennzeichnet, dass** der Kühlkreislauf zwischen einer Wärmeaufnahme (3) der Motorspindel zum Aufnehmen von Motorspindelwärme und der Kühleinheit (6) zur Kühlung des Kühlmediums wenigstens ein Zuströmelement (4, 5) und ein Abströmelement (4, 5) zum Transportieren des Kühlmediums aufweist, wobei das Abströmelement (4, 5) als erste Leitung (4, 5) zum Ableiten des von der Motorspindelwärme erwärmten Kühlmediums und wobei das Zuströmelement (4, 5) als zweite Leitung (4, 5) zum Zuleiten des von der Kühleinheit (6) gekühlten Kühlmediums zur Wärmeaufnahme (3) ausgebildet ist, und dass die Spindeleinheit (1) die Kühleinheit (6) umfasst und dass die Spindeleinheit mit geschlossenern Kühlkreislauf in eine Spindelaufnahme (11) einer Werkzeugmaschine einsetzbar ist.

2. Spindeleinheit nach Anspruch 1, **dadurch gekennzeichnet, dass** die Motorspindel (2) ein Spindelgehäuse (3) umfasst, in dem die Kühleinheit (6) wenigstens teilweise angeordnet ist.

3. Spindeleinheit nach einem der vorgenannten Ansprüche, **dadurch gekennzeichnet, dass** die Kühleinheit (6) wenigstens teilweise hinter der Motorspindel (2) angeordnet ist.

4. Spindeleinheit nach einem der vorgenannten Ansprüche, **dadurch gekennzeichnet, dass** die Kühleinheit (6) einen Kühler (7) mit oberflächenvergrößernden Kühlstrukturen umfaßt.

5. Spindeleinheit nach einem der vorgenannten Ansprüche, **dadurch gekennzeichnet, dass** eine Luftkühlung des Kühlers (7) vorgesehen ist.

6. Spindeleinheit nach einem der vorgenannten Ansprüche, **dadurch gekennzeichnet, dass** ein Gebläse (8) für die Luftkühlung vorgesehen ist.

7. Spindeleinheit nach einem der vorgenannten Ansprüche, **dadurch gekennzeichnet, dass** eine Verdampfung des Kühlmediums im Bereich der Wärmeaufnahme von der Motorspindel (2) vorgesehen ist.

8. Spindeleinheit nach einem der vorgenannten Ansprüche, **dadurch gekennzeichnet, dass** eine Kondensation des Kühlmediums im Bereich der Kühleinheit (6) vorgesehen ist.

9. Spindeleinheit nach einem der vorgenannten Ansprüche, **dadurch gekennzeichnet, dass** eine Umwälzpumpe für das Kühlmedium vorgesehen ist.

10. Spindeleinheit nach einem der vorgenannten Ansprüche, **dadurch gekennzeichnet, dass** ein Druck- und/oder Volumenausgleichsbehälter (10) für das Kühlmedium vorgesehen ist.

11. werkzeugmaschine mit Spindelaufnahme (11), **dadurch gekennzeichnet, dass** eine Spindeleinheit (1) nach einem der vorgenannten Ansprüche in die Spindelaufnahme (11) der Werkzeugmaschine eingesetzt ist.

## Claims

1. Spindle unit for fitting into a machine tool provided with a spindle mount, whereby a motor spindle and a substantially closed cooling circuit is provided with a liquid cooling medium for cooling the motor spindle, whereby a cooling unit (6) can be inserted at least partly into a spindle mount (11) of a machine tool, **characterised in that** the cooling circuit between a heat absorption element (3) of the motor spindle for absorbing heat from the motor spindle and the cooling unit (6) for cooling the cooling medium comprises at least one inflow element (4, 5) and an outflow element (4, 5) for transporting the cooling medium, whereby the outflow element (4, 5) is designed as a first line (4, 5) for diverting the cooling medium heated by the motor spindle, and whereby the inflow element (4, 5) is designed as a second line (4, 5) for supplying the cooling medium cooled by the cooling unit (6) to the heat absorption element (3), and **in that** the spindle unit (1) comprises the cooling unit (6) and **in that** the spindle unit can be inserted with a closed cooling circuit into a spindle mount (11) of a machine tool.

2. Spindle unit according to claim 1, **characterised in that** the motor spindle (2) comprises a spindle housing (3) in which the cooling unit (6) is arranged at least partly.

3. Spindle unit according to one of the preceding claims, **characterised in that** the cooling unit (6) is arranged at least partly behind the motor spindle (2).

4. Spindle unit according to one of the preceding claims, **characterised in that** the cooling unit (6) comprises a cooler (7) with surface-increasing cooling structures.

5. Spindle unit according to one of the preceding claims, **characterised in that** an air cooling unit of the cooler (7) is provided.

6. Spindle unit according to one of the preceding claims, **characterised in that** a fan (8) is provided for the air cooling unit.

7. Spindle unit according to one of the preceding claims, **characterised in that** the cooling medium vaporises in the region of the heat absorption unit of the motor spindle (2).

8. Spindle unit according to one of the preceding claims, **characterised in that** the cooling medium condenses in the region of the cooling unit (6).

9. Spindle unit according to one of the preceding claims, **characterised in that** a circulating pump is provided for the cooling medium.

10. Spindle unit according to one of the preceding claims, **characterised in that** a pressure and/or volume equalisation container (10) is provided for the cooling medium.

11. Machine tool with a spindle mount (11), **characterised in that** a spindle unit (1) according to one of the preceding claims is inserted into the spindle mount (11) of the machine tool.

## Revendications

1. Unité de broche destinée à être montée dans une machine-outil pourvue d'un logement de broche, une broche motorisée et un circuit de refroidissement essentiellement fermé avec un fluide de refroidissement liquide pour le refroidissement de la broche motorisée étant prévus, une unité de refroidissement (6) pouvant être installée au moins en partie dans un logement de broche (11) d'une machine-outil,
**caractérisée en ce que** le circuit de refroidissement présente, entre une absorption de chaleur (3) de la broche motorisée destinée à absorber la chaleur de broche motorisée et l'unité de refroidissement (6) destinée à refroidir le fluide de refroidissement, au moins un élément d'amenée (4, 5) et un élément d'évacuation (4, 5) afin de transporter le fluide de refroidissement, l'élément d'évacuation (4, 5) étant réalisé en tant que première conduite (4, 5) destinée à évacuer le fluide de refroidissement réchauffé par la chaleur de broche motorisée et l'élément d'amenée (4, 5) en tant que seconde conduite (4, 5) destinée à amener le fluide de refroidissement refroidi par l'unité de refroidissement (6) à l'absorption de chaleur (3), **en ce que** l'unité de broche (1) comprend l'unité de refroidissement (6) et **en ce que** l'unité de broche avec circuit de refroidissement fermé peut être installée dans un logement de broche (11) d'une machine-outil.

2. Unité de broche selon la revendication 1,
**caractérisée en ce que** la broche motorisée (2) comprend une enveloppe de broche (3) dans laquelle est agencée au moins en partie l'unité de refroidissement (6).

3. Unité de broche selon l'une des revendications précédentes,
**caractérisée en ce que** l'unité de refroidissement (6) est agencée au moins en partie derrière la broche motorisée (2).

4. Unité de broche selon l'une des revendications précédentes,
**caractérisée en ce que** l'unité de refroidissement (6) comporte un refroidisseur (7) avec des structures de refroidissement qui augmentent la superficie.

5. Unité de broche selon l'une des revendications précédentes,
**caractérisée en ce qu'**il est prévu un refroidissement par air du refroidisseur (7).

6. Unité de broche selon l'une des revendications précédentes,
**caractérisée en ce qu'**il est prévu un ventilateur (8) pour le refroidissement par air.

7. Unité de broche selon l'une des revendications précédentes,
**caractérisée en ce qu'**il est prévu une évaporation du fluide de refroidissement dans la zone de l'absorption de chaleur de la broche motorisée (2).

8. Unité de broche selon l'une des revendications précédentes,
**caractérisée en ce qu'**il est prévu une condensation du fluide de refroidissement dans la zone de l'unité de refroidissement (6).

9. Unité de broche selon l'une des revendications précédentes,
**caractérisée en ce qu'**il est prévu une pompe de circulation pour le fluide de refroidissement.

10. Unité de broche selon l'une des revendications précédentes,
**caractérisée en ce qu'**il est prévu un récipient de compensation de pression et/ou de volume (10) pour le fluide de refroidissement.

11. Machine-outil avec logement de broche (11),
**caractérisée en ce qu'**une unité de broche (1) selon l'une des revendications précédentes est installée dans le logement de broche (11) de la machine-outil.
